# EUROPÄISCHE PATENTSCHRIFT

(11) **EP 4 233 017 B1**
(45) Veröffentlichungstag und Bekanntmachung des Hinweises auf die Patenterteilung: **09.12.2026**
(21) Anmeldenummer: 21806144.8
(22) Anmeldetag: 19.10.2021
(51) Int. Cl.: G06V 20/58, G06V 10/60, G06F 18/2413, G06V 10/82

(54) **SYSTEM ZUR VERMEIDUNG VON UNFÄLLEN DURCH WILDWECHSEL BEI DÄMMERUNG UND NACHT**
SYSTEM FOR AVOIDING ACCIDENTS CAUSED BY WILD ANIMALS CROSSING AT DUSK AND AT NIGHT
SYSTÈME POUR ÉVITER LES ACCIDENTS PROVOQUÉS PAR DES ANIMAUX SAUVAGES QUI TRAVERSENT AU CRÉPUSCULE ET LA NUIT

(30) Priorität: 21.10.2020 DE 102020213270
(43) Veröffentlichungstag der Anmeldung: 30.08.2023
(73) Patentinhaber: AUMOVIO Autonomous Mobility Germany GmbH, 85057 Ingolstadt (DE)
(72) Erfinder: SCHARFENBERGER, Christian, 90411 Nürnberg (DE); KARG, Michelle, 90411 Nürnberg (DE)
(74) Vertreter: Aumovio Corporation
(86) Internationale Anmeldenummer: PCT/DE2021/200153
(87) Internationale Veröffentlichungsnummer: WO 2022/083833

(56) Entgegenhaltungen:
- QINGXU FU ET AL: "Learning an Adaptive Model for Extreme Low-light Raw Image Processing", ARXIV.ORG, CORNELL UNIVERSITY LIBRARY, 201 OLIN LIBRARY CORNELL UNIVERSITY ITHACA, NY 14853, 22 April 2020 (2020-04-22), XP081650255
- CHO SE WOON ET AL: "Semantic Segmentation With Low Light Images by Modified CycleGAN-Based Image Enhancement", IEEE ACCESS, vol. 8, no. 13, 15 May 2020 (2020-05-15), pages 93561 - 93585, XP055885885, Retrieved from the Internet <URL:https://ieeexplore.ieee.org/ielx7/6287639/8948470/09094229.pdf?tp=&arnumber=9094229&isnumber=8948470&ref=aHR0cHM6Ly9pZWVleHBsb3JlLmllZWUub3JnL2Fic3RyYWN0L2RvY3VtZW50LzkwOTQyMjk=> DOI: 10.1109/ACCESS.2020.2994969
- YANG WENHAN ET AL: "Advancing Image Understanding in Poor Visibility Environments: A Collective Benchmark Study", IEEE TRANSACTIONS ON IMAGE PROCESSING, IEEE, USA, vol. 29, 27 March 2020 (2020-03-27), pages 5737 - 5752, XP011785319, ISSN: 1057-7149, [retrieved on 20200421], DOI: 10.1109/TIP.2020.2981922

## Beschreibung

Die Erfindung bezieht sich auf ein Verfahren und eine Vorrichtung zur Vermeidung von Unfällen durch Wildwechsel bei Dämmerung und Nacht mittels eines fahrzeuggebundenen Kamerasystems.

Heutige Fahrzeuge sind mit kamerabasierten Fahrerassistenzsystemen ausgestattet, welche die Bereiche vor, neben oder hinter dem Fahrzeug überwachen. Dies dient entweder der Erkennung von Objekten zur Vermeidung von Kollisionen, der Erkennung von Straßenbegrenzungen oder zum Halten des Fahrzeuges innerhalb der Fahrspur.

Diese Systeme arbeiten mit hochauflösenden Kameras, welche heute einen immer höheren dynamischen Bereich besitzen. Von letzterem profitieren insbesondere Anzeige- und Erkennungsfunktionen in Situationen mit unterschiedlichen Helligkeitsstufen und Kontrast.

Die auf diesen Kamerasystemen basierenden Erkennungsalgorithmen kombinieren teilweise bereits Ansätze der klassischen Bildverarbeitung mit Ansätzen aus dem maschinellen Lernen, insbesondere dem Deep Learning. Klassische Ansätze zur Erkennung von Objekten oder Strukturen im Rahmen der Bildverarbeitung basieren auf manuell ausgewählten Features (Merkmalen), während auf Deep Learning basierende Ansätze relevante Features im Trainingsverfahren selbst bestimmen und optimieren.

In letzter Zeit hat sich der Schwerpunkt der Objekterkennung um die Erkennung von Tieren und Wildwechsel auf der Fahrbahn erweitert. So zeigt beispielsweise DE 102004050597 A1 eine Wildwechselwarnvorrichtung und Verfahren zur Warnung vor lebenden Objekten auf einer Verkehrsstraße.

Die Erkennung dient primär zu Vermeidung durch Schäden durch Kollision mit Wild, gerade bei Dämmerung oder Nacht. Die hierfür verwendeten Kameras haben typischerweise einen auf die Straße gerichteten Sichtbereich, so dass überwiegend auf der Straße befindliche Tiere wie Rehe zu erkennen sind. Unterstützt werden diese Systeme durch die Fahrzeugscheinwerfer bei Dämmerung oder Nacht, welche den Straßenbereich ausreichend ausleuchten können.

Die verwendeten Systeme zeigen eine sehr gute Performance bei Szenarien, die durch Tageslicht, Straßenbeleuchtung oder Scheinwerferlicht eines Fahrzeuges hinreichend ausgeleuchtet sind. Auf der Straße befindliche Tiere können bei Dämmerung oder Nacht relativ gut erkannt werden. Bei diesen Kamerasystemen treten jedoch folgende Probleme auf:
1) Durch das schmale Sichtfeld der Kamera können nur Tiere auf der Fahrbahn erkannt werden. Bei einem plötzlichen Wildwechsel können diese Tiere aber ungesehen sehr nahe vor dem Fahrzeug auf die Straße laufen und plötzlich im Sichtbereich erscheinen. Eine Reaktion wie Bremsen ist somit nur noch sehr schwer möglich, und es kann zu einer Kollision kommen.
2) Verstärkt wird dieses Problem bei Dämmerung oder Nacht auf einer unbeleuchteten Landstraße, wo sich der Straße annähernde Tiere durch fehlendes Licht von einem Fahrer nur sehr schwer bis gar nicht gesehen werden, und dann plötzlich im Scheinwerferlicht erscheinen, wenn es bereits zu spät ist.

Mit den zukünftigen Anforderungen an Umfelderkennung und Fahrerassistenzsysteme werden verstärkt Weitwinkelkameras Einsatz finden, da damit die Erkennung von kreuzendem Verkehr für einen Kreuzungsassistenten möglich sein wird. Diese können sowohl die Straße als auch einen großen Bereich neben der Straße überwachen, und wären damit sehr gut geeignet zur Erkennung von Wildwechsel.

EP 3073465 A1 zeigt ein Tierdetektionssystem für ein Fahrzeug, welches auf einem Rundumsichtkamerasystem und einem Ortsbestimmungssystem basiert.

Degradation sowohl in der Erkennung von Objekten wie Wild als auch bei der Darstellung der Umgebung tritt jedoch ein, sobald in einer Situation nur wenig bis gar kein Umgebungslicht zum Ausleuchten des Szenarios zur Verfügung steht. Dies ist dann der Fall, wenn Fahrzeugscheinwerfer nur den Bereich der Straße, nicht aber die Bereiche neben der Straße ausleuchten. Bei Nacht unterstützen aktuelle Beleuchtungs- und Kamerasysteme nur sehr unzureichend.

Abhilfe schaffen könnten zusätzliche Lampen, welche an den Seiten des Fahrzeuges eingebaut die kritischen Bereiche vor und neben dem Fahrzeug ausleuchten. Für ein vollständiges Ausleuchten ist jedoch eine hohe Anzahl an Lampen notwendig, die neben unliebsamen Designeinschränkungen auch zu erheblichen Mehrkosten führen würden.

Weiterhin können durch algorithmische Verfahren wie eine Gammakorrektur, einen automatischen Weißabgleich oder einen Histogrammausgleich (Histogram Equalization) Kamerabilder aufgehellt und verbessert werden. Letztere zeigen jedoch gerade bei Dunkelheit signifikante Performanceeinbußen durch fehlende Farbinformationen im Bild. Eine weitere Herausforderung sind die ungleichmäßig ausgeleuchteten Bildbereiche, bei denen einige sehr hell, und andere sehr dunkel sind. Eine globale oder lokale Aufhellung des Bildes würde die bereits ausreichend beleuchtete Bereich zu sehr aufhellen, oder dunklere Bereiche nur unzureichend aufhellen. Dies kann zu Artefakten führen, die für eine Erkennungsfunktion kritisch sind und beispielsweise zu "false positives" oder "false negatives" führen.

Andere Verfahren zur Verbesserung von Bildern mit ungenügender Helligkeit sind zum Beispiel aus Fu, Q. et al, "Learning an Adaptive Model for Extreme Low-light Raw Image Processing" bekannt.

Ein System wäre daher wünschenswert, welches ohne zusätzliche Beleuchtung algorithmisch eine gute Aufwertung der unausgeleuchteten Bereiche ermöglicht und eine Funktion zur frühzeitigen Erkennung von Wildwechsel bei Dämmerung oder Nacht ermöglicht.

Es ist Aufgabe der vorliegenden Erfindung, Lösungen hierfür bereitzustellen.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Ein Verfahren zur Vermeidung von Unfällen durch Wildwechsel bei Dämmerung und bei Nacht umfasst die Schritte:
a) Erfassen von Eingangs-Bilddaten einer aktuellen Helligkeit einer Fahrbahn und eines angrenzenden Bereichs seitlich der Fahrbahn mittels eines fahrzeuggebundenen Kamerasystems bei Dämmerung oder bei Nacht,
b) Umwandeln der Eingangs-Bilddaten in Ausgabe-Bilddaten mit abweichender Helligkeit mittels eines trainierten künstlichen neuronalen Netzwerks, und
c) Ausgeben der Ausgabe-Bilddaten, damit die Ausgabe-Bilddaten dem Fahrer des Fahrzeugs zur Vermeidung von Wildunfällen angezeigt werden können oder damit aus den Ausgabe-Bilddaten ein Wildtier mittels einer Bilderkennungsfunktion erkannt werden kann. Ein Beispiel eines fahrzeuggebundenen Kamerasystems ist eine hinter der Windschutzscheibe im Inneren des Fahrzeugs angeordnete Weitwinkelkamera, die den vor dem Fahrzeug und seitlich vor dem Fahrzeug liegenden Bereich der Fahrzeugumgebung durch die Windschutzscheibe erfassen und abbilden kann.

Die Weitwinkelkamera umfasst eine Weitwinkeloptik. Beispielsweise ist die Weitwinkeloptik mit einem horizontalen (und/oder vertikalen) Bildwinkel von z. B. mindestens + / - 50 Grad, insbesondere von mindestens + / - 70 Grad und/oder von + / - 100 Grad zur optischen Achse ausgebildet. Mittels der Weitwinkeloptik ist beispielsweise ein Peripherieumfeld wie z. B. ein Bereich seitlich der Fahrbahn auf der das Fahrzeug fährt oder ein Kreuzungsbereich zur frühzeitigen Objekterkennung von Tieren oder von kreuzenden Verkehrsteilnehmern erfassbar. Die Bildwinkel bestimmen das Sichtfeld (Field of view, FOV) der Kameravorrichtung.

Alternativ oder kumulativ kann das fahrzeuggebundene Kamerasystem ein Rundumsichtkamerasystem mit einer Mehrzahl von Fahrzeugkameras umfassen. Beispielsweise kann das Rundumsichtkamerasystem vier Fahrzeugkameras aufweisen, wobei eine nach vorne, eine nach hinten, eine nach links und eine nach rechts blicken kann.

Vorteile des Verfahrens sind:
- Vermeidung von Schäden am Fahrzeug durch Wildunfälle
- Vermeidung von Folgeschäden durch Auffahren eines anderen Fahrzeugs auf das eigene Fahrzeug, welches durch Wildwechsel bedingt eine starke Bremsung durchführen muss.
- Deutliche Verbesserung der Bildqualität bei der Anzeige von Nachtbildern
- Es wird keine zusätzliche Beleuchtung benötigt, welche Fahrzeugbereiche wie die seitlichen Bereiche mit fehlender Beleuchtung aufhellt. Dies kann ein Alleinstellungsmerkmal für ADAS darstellen.
- Generierung eines Bilddatenstromes für Human und Computer Vision aus einem Netzwerk zur Erkennung von kreuzendem Wild zur Vermeidung von Unfällen.

Das Trainieren (bzw. maschinelle Lernen) des künstlichen neuronalen Netzwerks kann mit einer Vielzahl von Trainings-Bildpaaren derart erfolgen, dass am Eingang des künstlichen neuronalen Netzwerks jeweils ein Bild einer ersten Helligkeit bzw. Helligkeitsverteilung und als Soll-Ausgabe-Bild ein Bild derselben Szene mit einer abweichenden zweiten Helligkeit bzw. Helligkeitsverteilung bereitgestellt wird. Der Begriff "Helligkeits-Umwandlung" kann auch eine Farb-Umwandlung und Kontrastverbesserung umfassen, so dass eine möglichst umfassende "Sichtverbesserung" erzielt wird. Eine Farb-Umwandlung kann beispielsweise durch eine Anpassung der Farbverteilung erfolgen. Das künstliche neuronale Netzwerk kann beispielsweise ein Convolutional Neural Network ("faltendes neuronales Netzwerk", CNN) sein.

Trainings-Bildpaare können erzeugt werden, indem jeweils ein erstes Bild mit erster und ein zweites Bild mit zweiter Helligkeit zeitgleich oder unmittelbar aufeinander folgend mit unterschiedlichen Belichtungszeiten aufgenommen werden. Eine erste kürzere Belichtungszeit führt zu einem dunkleren Trainingsbild und eine zweite längere Belichtungszeit zu einem helleren Trainingsbild. Beispielsweise ist die Kamera während der Erzeugung der Trainingsdaten stationär (unbewegt) gegenüber der zu erfassenden Umgebung. Hierzu können die Trainingsdaten beispielsweise mit einer Kamera eines stehenden Fahrzeugs erfasst werden. Die von der Kamera erfasste Szene kann beispielsweise eine statische Umgebung beinhalten, also ohne bewegte Objekte.

Es kann mindestens ein Faktor d als Maß für den Unterschied zwischen der zweiten und der ersten Helligkeit eines Trainings-Bildpaars ermittelt und dem künstlichen neuronalen Netzwerk im Rahmen des Trainings bereitgestellt werden.

Der Faktor d kann beispielsweise ermittelt werden als Verhältnis von zweiter Helligkeit zu erster Helligkeit. Die Helligkeit kann insbesondere als mittlere Helligkeit eines Bildes oder anhand eines Illuminanzhistogramms eines Bildes ermittelt werden.

In einer Ausführungsform bewirkt die Umwandlung einen Ausgleich bzw. eine Ausgewogenheit der Ausleuchtung des Bereichs seitlich der Fahrbahn und des Fahrbahnbereichs.

In einer Ausführungsform weist das künstliche neuronale Netz eine gemeinsame Eingangsschnittstelle für zwei separate Ausgangsschnittstellen auf. Die gemeinsame Eingangsschnittstelle weist geteilte Merkmalsrepräsentationsschichten auf. An der ersten Ausgangsschnittstelle werden helligkeitsumgewandelte Bilddaten ausgegeben. An der zweiten Ausgangsschnittstelle werden ADAS-relevante Detektionen mindestens einer ADAS-Detektionsfunktion ausgegeben. ADAS steht für fortschrittliche Systeme zum assistierten oder automatisierten Fahren (Englisch: Advanced Driver Assistance Systems). ADAS-relevante Detektionen sind somit z.B. Objekte, Gegenstände, Tiere, Verkehrsteilnehmer, die für ADAS/AD Systeme wichtige Eingangsgrößen darstellen. Das künstliche neuronalen Netzwerk umfasst ADAS-Detektionsfunktionen, z.B. eine Objekterkennung, eine Wildtiererkennung, eine Spurerkennung, eine Tiefenerkennung (3D-Schätzung der Bildbestandteilee), semantische Erkennung, oder dergleichen mehr. Im Rahmen des Trainings werden die Ausgaben beider Ausgangsschnittstellen optimiert.

Die in ihrer Helligkeit optimierten Ausgabe-Bilddaten ermöglichen vorteilhafterweise eine bessere maschinelle Objekt- und/oder Tiererkennung auf den Ausgabe-Bilddaten, z.B. eine herkömmliche Tier-/Objekt-/Fahrspur- oder Verkehrszeichendetektion.

In einer Ausführungsform wird in Schritt a) zusätzlich ein Faktor d dem trainierten künstlichen neuronalen Netzwerk bereitgestellt wird und in Schritt b) die (Stärke bzw. der Grad der) Umwandlung in Abhängigkeit von dem Faktor d gesteuert. Basierend auf dem Faktor d kann das Maß der Verstärkung reguliert werden.

Gemäß einer Ausführungsform erfolgt die Umwandlung in Schritt b) derart, dass eine Sichtverbesserung hinsichtlich Überbelichtung erzielt wird. Beispielsweise wurde im Rahmen des Trainings gelernt, überbelichtete Bilder in der Helligkeit zu reduzieren.

In einer Ausführungsform werden in Schritt b) die Eingangs-Bilddaten mit aktueller Helligkeit in Ausgangs-Bilddaten mit einer längeren (virtuellen) Belichtungszeit umgewandelt. Das bietet den Vorteil einer Vermeidung von Bewegungsunschärfe ("motion blur").

Gemäß einer Ausführungsform wird der Faktor d geschätzt und bei der Schätzung wird die Helligkeit der aktuellen erfassten Bilddaten (z.B. Illuminanzhistogramm oder mittlere Helligkeit) oder der vorhergehend erfassten Bilddaten berücksichtigt.

Eine zu hohe Helligkeit spricht beispielsweise für eine Überbelichtung, eine zu niedrige Helligkeit für eine Unterbelichtung. Beides kann mittels entsprechender Schwellwerte festgestellt und durch eine entsprechende Umwandlung behoben werden

In einer Ausführungsform wird nach einer Erkennung, dass mindestens zwei Bildregionen eines aktuell erfassten Bildes, eine (deutlich) unterschiedliche Bildhelligkeit aufweisen, für jede der Bildregionen ein unterschiedlicher Faktor d geschätzt oder bestimmt werden. Beim Vorliegen von Bildregionen mit unterschiedlichen Beleuchtungsintensitäten kann somit der Faktor d innerhalb eines Bildes variieren und Bildregionen mit unterschiedlichen Faktoren d werden über Helligkeitsschätzungen bestimmt. Die Helligkeitsverbesserung kann somit an einzelne Bildregionen angepasst werden.

Gemäß einer Ausführungsform kann bei der Bestimmung bzw. Schätzung des Faktors d eine zeitliche Entwicklung des Faktors d berücksichtigt werden.

Hierzu gehen in die Schätzung die zeitliche Entwicklung des Faktors d und eine Sequenz von Eingangsbildern ein. Information über die zeitliche Entwicklung der Helligkeit kann auch für Bildregionen mit unterschiedlichen Faktoren d herangezogen werden.

Hierzu kann gemäß einer Ausführungsform für jede der Fahrzeugkameras (2-i) ein eigener Faktor d geschätzt oder bestimmt wird

Gemäß einer Ausführungsform mit einer fahrzeuggebundenen Umfelderfassungskamera werden bei der Bestimmung des Faktors d Informationen über die aktuelle Umgebung des Fahrzeugs berücksichtigt.

Die Schätzung des Faktors d kann weitere Szeneninformationen berücksichtigen, wie Umgebungsinformationen (Landstraße, Stadt, Autobahn, Tunnel, Unterführung), die über Bildverarbeitung aus den Sensordaten oder Daten eines Navigationssystems (bspw. GPS-Empfänger mit digitaler Karte) gewonnen werden.

Beispielsweise kann der Faktor d basierend auf Umgebungsinformationen und aus der zeitlichen Reihenfolge von Bildern als auch aus der Historie des Faktors d geschätzt werden.

Die Schätzung des Faktors d beim Einsatz eines trainierten künstlichen neuronalen Netzwerks kann somit dynamisch erfolgen.

In einer Ausführungsform erfolgt eine Ausgabe der umgewandelten Bilddaten des Kamerasystems an mindestens eine ADAS-Detektionsfunktion, welche ADAS-relevante Detektionen ermittelt und ausgibt. ADAS-Detektionsfunktionen können bekannte Kanten- bzw. Mustererkennungsverfahren umfassen sowie Erkennungsverfahren, die mittels eines künstlichen neuronalen Netzwerks relevante Bildobjekte wie z.B. Wildtiere erkennen und optional klassifizieren können.

In einer alternativen Ausführungsform kann der Ansatz erweitert werden und das künstliche neuronale Netzwerk zur Helligkeits-Umwandlung der Bilddaten kann mit einem neuronalen Netzwerk für ADAS-Detektionsfunktionen, z.B. Spurerkennung, Objekterkennung, Tiefenerkennung, semantische Erkennung, kombiniert werden. Somit wird kaum zusätzlicher Aufwand in der Rechenzeit verursacht. Nach dem Training kann die (erste) Ausgangsschnittstelle für die Ausgabe der umgewandelten Bilddaten eliminiert werden, so dass bei Einsatz im Fahrzeug nur die (zweite) Ausgangsschnittstelle für die ADAS-Detektionen vorhanden ist.

Die Erfindung betrifft weiterhin eine Vorrichtung mit mindestens einer Datenverarbeitungseinheit konfiguriert zur Helligkeits-Umwandlung von Eingangs-Bilddaten einer Kamera in Ausgabe-Bilddaten. Die Vorrichtung umfasst: eine Eingangsschnittstelle, ein trainiertes künstliches neuronales Netzwerk und eine (erste) Ausgangsschnittstelle.

Die Eingangsschnittstelle ist konfiguriert zum Empfangen von Eingangs-Bilddaten einer aktuellen Helligkeit, die von der Kamera erfasst worden sind. Das trainierte künstliche neuronale Netzwerk ist dazu konfiguriert, die Eingangs-Bilddaten, die eine erste Helligkeit aufweisen, in Ausgabe-Bilddaten mit abweichender Ausgabehelligkeit umzuwandeln.

Die (erste) Ausgangsschnittstelle ist dazu konfiguriert, die umgewandelten Bilddaten auszugeben.

Mit anderen Worten umfasst die Vorrichtung (bzw. das Assistenzsystem) mindestens ein Kamerasystem, welches die Straße und die Bereiche neben der Straße überwachen kann. Das Assistenzsystem rechnet die Bilddaten des zugrundliegenden Kamerasystems trotz Dunkelheit, sehr unausgewogener Beleuchtung und fehlenden Farbinformationen algorithmisch in eine Darstellung um, welche einer Aufnahme bei voller Ausleuchtung oder Tageslicht entspricht. Das umgerechnete Bild dient dann entweder reinen Anzeigezwecken oder als Input für CNN- oder feature-basierte Erkennungsalgorithmen zur Erkennung von Wildwechsel.

Die Vorrichtung bzw. die Datenverarbeitungseinheit kann insbesondere einen Mikrocontroller oder -prozessor, eine Zentrale Verarbeitungseinheit (CPU), ein Grafische Verarbeitungseinheit (GPU), einen Digital Signal Processor (DSP), einen ASIC (Application Specific Integrated Circuit), einen FPGA (Field Programmable Gate Array) und dergleichen mehr sowie Software zur Durchführung der entsprechenden Verfahrensschritte umfassen.

Gemäß einer Ausführungsform ist die Datenverarbeitungseinheit in eine hardwarebasierter Bildvorverarbeitungsstufe (Image Signal Processor, ISP) implementiert.

In einer Ausführungsform ist das trainierte künstliche neuronale Netzwerk zur Helligkeits-Umwandlung ein Bestandteil eines fahrzeugseitigen ADAS-Detektions-Neuronalen-Netzwerks, z.B. zur semantischen Segmentierung, Fahrspurdetektion bzw. Objektdetektion, mit einer geteilten Eingangsschnittstelle (Eingangs- bzw. Merkmalsrepräsentationsschichten), und zwei separaten Ausgangsschnittstellen (Ausgangsschichten) ist, wobei die erste Ausgangsschnittstelle zur Ausgabe der umgewandelten Ausgabebilddaten und die zweite Ausgangsschnittstelle zur Ausgabe der ADAS-Detektionen (Bilderkennungsdaten) konfiguriert sind.

Die Erfindung betrifft weiterhin ein Computer Programmelement, welches, wenn damit eine Datenverarbeitungseinheit programmiert wird, die Datenverarbeitungseinheit dazu anweist, ein Verfahren zur Helligkeits-Umwandlung von Eingangs-Bilddaten einer Kamera in Ausgabe-Bilddaten durchzuführen.

Die Erfindung betrifft weiterhin ein Computerlesbares Speichermedium, auf dem ein solches Programmelement gespeichert ist.

Ein weiterer Aspekt betrifft die Verwendung eines Verfahrens zum maschinellen Lernen einer Helligkeits-Umwandlung von Eingangs-Bilddaten einer Kamera in Ausgabe-Bilddaten zum Trainieren eines künstlichen neuronalen Netzwerks einer Vorrichtung mit mindestens einer Datenverarbeitungseinheit.

Die vorliegende Erfindung kann somit in digitalen elektronischen Schaltkreisen, Computer-Hardware, Firmware oder Software implementiert sein.

Im Folgenden werden Ausführungsbeispiele und Fig. näher beschrieben. Dabei zeigen
Fig. 1: schematisch ein Fahrzeug mit einem Kamerasystem K und Frontscheinwerfern S;
Fig. 2: ein System zur Sichtverbesserung von Kamerabildern;
Fig. 3: ein System mit einem ersten neuronalen Netz zur Sichtverbesserung und einem nachgelagerten zweiten neuronalen Netz für Detektionsfunktionen;
Fig. 4: ein System mit kombinierter Sichtverbesserung und Detektionsfunktionen;
Fig. 5 ein abgewandeltes System, bei dem die Sichtverbesserung nur im Rahmen des Trainings berechnet und ausgegeben wird;
Fig. 6: eine erste schematische Darstellung einer Vorrichtung mit einem Kamerasystem zur Rundumsichterfassung; und
Fig. 7: eine zweite schematische Darstellung einer Vorrichtung mit einem Kamerasystem zur Rundumsichterfassung in einem Fahrzeug.

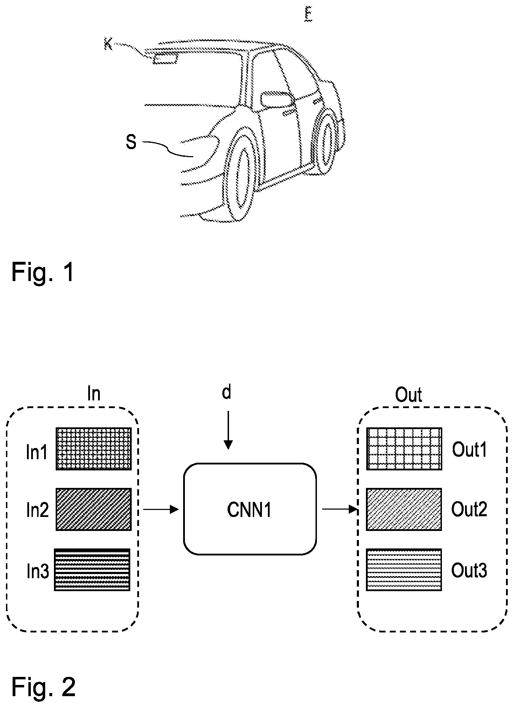

Fig. 1 zeigt schematisch ein Fahrzeug F mit einem Kamerasystem K, beispielsweise einer Weitwinkelkamera, die im Innenraum des Fahrzeugs hinter der Windschutzscheibe angeordnet ist und das Umfeld bzw. die Umgebung des Fahrzeugs F durch diese erfasst. Bei Dunkelheit beleuchten die Frontscheinwerfer S des Fahrzeugs F das Umfeld vor dem Fahrzeug, welches vom Kamerasystem K erfasst wird. Die Intensität der Beleuchtung des Fahrzeugumfelds hängt von der Charakteristik der Frontscheinwerfer S ab. Da die Intensität mit wachsendem Abstand vom Frontscheinwerfer abnimmt (etwa proportional zum Quadrat des Abstands), erscheinen weiter entfernte Umgebungsbereiche im Kamerabild dunkler. Insbesondere die Seitenbereiche der Fahrzeugumgebung werden durch die Frontscheinwerfer S nicht so stark beleuchtet wie der Bereich gerade vor dem Fahrzeug F. Diese unterschiedliche Beleuchtung kann dazu führen, dass die von der Kamera erfassen Bilder nicht alle für den Fahrer, für Fahrerassistenzsysteme oder für Systeme zum automatisierten Fahren relevanten Informationen enthalten. Dies kann bei Wildwechsel bei Dämmerung oder Nacht zu gefährlichen Situationen führen. Wünschenswert wäre hierfür ein sichtverbessertes Bild, bei dem (zu) dunkle Bildbereiche eine automatische Lichtverstärkung erfahren.

In einer Ausführungsform basiert die Berechnung in einem System zur Vermeidung von Wildunfällen beispielsweise auf einem neuronalen Netz, welches einer Detektions- oder Anzeigeeinheit vorgelagert ein sehr dunkles Eingangsbild mit wenig Kontrast und Farbinformationen oder ein Eingangsbild mit unausgewogener Beleuchtung in eine taghelle Repräsentation umwandelt.

Für diese Aufgabe wurde das künstliche neuronale Netz mit einem Datensatz bestehend aus "dunklen und beleuchtungstechnisch unausgewogenen Eingangsbildern" und den dazugehörigen "taghellen Bildern" trainiert. Je nach Art des Trainings kann das neuronale Netz Verfahren wie White Balancing, Gamma Correction und Histogram Equalization in einer idealen Weise nachbilden, und zusätzliche, in der Netzwerkstruktur gespeicherten Informationen nutzen, um fehlende Farb- oder Kontrastinformationen automatisch zu ergänzen. Die berechneten Bilder dienen dann als Eingang zur Anzeige, Warnung oder aktiven Vermeidung von Kollisionen mit Tieren bei einem Wildwechsel.

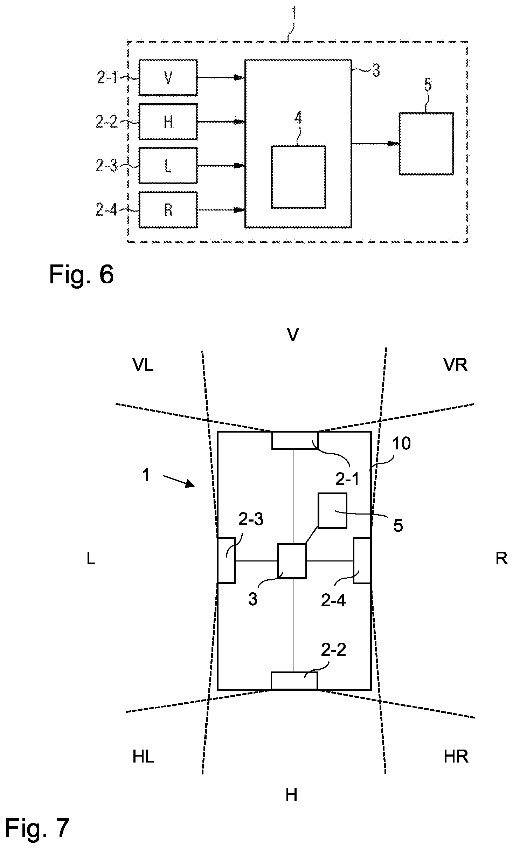

Wie man aus Fig. 6 erkennen kann, kann eine Ausführungsform einer Vorrichtung 1 zur Vermeidung von Unfällen durch Wildwechsel bei Dämmerung und Nacht ein Kamerasystem K mit mehreren Fahrzeugkameras eines Rundumsichtsystems aufweisen. Für eine Umwandlung von Eingangs-Bilddaten der mehreren Fahrzeugkameras in optimierte Ausgabe-Bilddaten können mehrere Einheiten bzw. Schaltungskomponenten vorgesehen sein. Bei dem in Fig. 6 dargestellten Ausführungsbeispiel weist die Vorrichtung zur adaptiven Bildkorrektur mehrere Fahrzeugkameras 2-i auf, die jeweils Kamerabilder bzw. Videodaten erzeugen. Bei dem in Fig. 6 dargestellten Ausführungsbeispiel weist die Vorrichtung 1 vier Fahrzeugkameras 2-i zur Erzeugung von Kamerabildern auf. Die Anzahl der Fahrzeugkameras 2-i kann für unterschiedliche Anwendungen variieren. Die erfindungsgemäße Vorrichtung 1 weist mindestens zwei Fahrzeugkameras zur Erzeugung von Kamerabildern auf. Die Kamerabilder von benachbarten Fahrzeugkameras 2-i weisen typischerweise überlappende Bildbereiche auf.

Die Vorrichtung 1 enthält eine Datenverarbeitungseinheit 3, welche die von den Fahrzeugkameras 2-i erzeugten Kamerabilder zu einem Gesamtbild zusammensetzt. Wie in Fig. 1 dargestellt, weist die Datenverarbeitungseinheit 3 ein System zur Bildumwandlung 4 auf. Das System zur Bildumwandlung 4 erzeugt aus den Eingangsbilddaten (Ini) der Fahrzeugkameras (2-i) Ausgangs- bzw. Ausgabebilddaten (Opti), die eine optimierte Helligkeit bzw. Farbverteilung aufweisen. Die optimierten Ausgabebilddaten der einzelnen Fahrzeugkameras werden zu einem zusammengesetzten Gesamtbild zusammengesetzt (sogenanntes Stitching). Das von der Bildverarbeitungseinheit 3 aus den optimierten Bilddaten (Opti) zusammengesetzte Gesamtbild wird anschließend durch eine Anzeigeeinheit 5 einem Nutzer angezeigt. Durch die Sichtverbesserung bei der Umwandlung der Bilddaten, kann der Nutzer Wildtiere bei Dämmerung oder Nacht frühzeitig erkennen und wird dadurch effektiv bei der Vermeidung von Wildwechselunfällen unterstützt.

Bei einer möglichen Ausführungsform wird für das System zur Bildumwandlung 4 durch eine eigenständige Hardwareschaltung gebildet, welche die Umwandlung der Helligkeit bzw. der Farbverteilung vornimmt. Bei einer alternativen Ausführungsform führt das System Programmbefehle bei Durchführung eines Verfahrens zur Bildumwandlung aus.

Die Datenverarbeitungseinheit 3 kann einen oder mehrere Bildverarbeitungsprozessoren aufweisen, wobei sie die von den verschiedenen Fahrzeugkameras 2-i empfangenen Kamerabilder bzw. Videodaten umwandelt und anschließend zu einem zusammengesetzten Gesamtbild zusammensetzt. Bei einer möglichen Ausführungsform wird das System zur Bildumwandlung 4 durch einen dafür vorgesehenen Prozessor gebildet, welcher die Umwandlung der Helligkeit bzw. der Farbverteilung parallel zu dem oder den übrigen Prozessoren der Datenverarbeitungseinheit 3 vornimmt. Durch die parallele Datenverarbeitung wird die benötigte Zeit zur Verarbeitung der Bilddaten gesenkt.

Fig. 7 zeigt eine weitere schematische Darstellung einer Vorrichtung 1 zur Vermeidung von Unfällen durch Wildwechsel bei Dämmerung und Nacht in einer Ausgestaltung. Die in Fig. 7 dargestellte Vorrichtung 1 wird in einem Surround View System eines Fahrzeugs 10, insbesondere eines Personenkraftwagens oder eines Lastkraftwagens, eingesetzt. Hierbei können sich die vier verschiedenen Fahrzeugkameras 2-1, 2-2, 2-3, 2-4 des Kamerasystems K an verschiedenen Seiten des Fahrzeugs 10 befinden und weisen entsprechende Sichtbereiche (gestrichelte Linien) vor V, hinter H, links L und rechts R dem bzw. des Fahrzeug(s) 10 auf.

Beispielsweise befindet sich die erste Fahrzeugkamera 2-1 an einer Vorderseite des Fahrzeugs 10, die zweite Fahrzeugkamera 2-2 an einer Hinterseite des Fahrzeugs 10, die dritte Fahrzeugkamera 2-3 an der linken Seite des Fahrzeugs 10 und die vierte Fahrzeugkamera 2-4 an der rechten Seite des Fahrzeugs 10. Die Kamerabilder von zwei benachbarten Fahrzeugkameras 2-i weisen überlappende Bildbereiche VL, VR, HL, HR auf. Bei den Fahrzeugkameras 2-i handelt es sich bei einer möglichen Ausführungsform um sogenannte Fischaugenkameras, die einen Blickwinkel von mindestens 185° aufweisen. Die Fahrzeugkameras 2-i können die Kamerabilder bzw. Kamera-Bild-Frames bzw. Videodaten bei einer möglichen Ausführungsform über eine Ethernet-Verbindung an die Datenverarbeitungseinheit 3 übertragen. Die Datenverarbeitungseinheit 3 berechnet aus den Kamerabildern der Fahrzeugkameras 2-i ein zusammengesetztes Surround-View-Kamerabild, das auf der Anzeige 5 des Fahrzeugs 10 dem Fahrer und/oder einem Passagier angezeigt wird.

Bei einer dunklen Umgebung des Fahrzeugs 10 leuchten die aktivierten Frontscheinwerfer den vorderen Bereich V vor dem Fahrzeug 10 mit weißem Licht und relativ hoher Intensität aus, die Heckscheinwerfer den hinteren Bereich H hinter dem Fahrzeug mit rotem Licht und mittlerer Intensität. Dagegen sind die Bereiche links L und rechts R neben dem Fahrzeug 10 nahezu unbeleuchtet.

Zur Erkennung von Wildwechsel bei Dämmerung oder bei Nacht können die Bilder von einem Surroundviewsystem zum einen zur Erkennung von Wildwechsel genutzt werden und zum anderen die Informationen aus unterschiedlichen Beleuchtungsprofilen zu einem Gesamtbild mit ausgewogener Beleuchtung verrechnet werden. Als Beispiel sei die Anzeige der Fahrzeugumgebung auf einem Display bzw. einer Anzeige 5 bei einer unbeleuchteten Landstraße genannt, wo die Bereiche der vorderen und hinteren Kameras durch Scheinwerfer ausgeleuchtet sind, die seitlichen Bereiche allerdings keine Aufhellung durch Scheinwerfer erfahren. Dadurch kann eine homogene Darstellung der Bereiche mit Wild erreicht werden, und ein Fahrer rechtzeitig gewarnt werden.

In einer weiteren Ausführung kann das System zur Bildumwandlung 4 mit dem neuronalen Netz dahingehend trainiert werden, dass es Informationen aus den besser beleuchteten Bereichen nutzt, um die Umrechnung für die unbeleuchteten Bereiche weiter zu verbessern. Hier wird das Netz dann weniger mit Einzelbildern für jede Einzelkamera 2-1, 2-2, 2-3, 2-4 individuell trainiert, sondern als Gesamtsystem bestehend aus mehreren Kamerasystemen.

Bei einem gleichzeitigen bzw. gemeinsamen Training eines künstlichen neuronalen Netzwerks mit dunklen Bildern (beispielsweise für die Seitenkameras 2-3, 2-4) und hellen Bildern (beispielsweise für die Front- 2-1 und Rearviewkameras 2-2) lernt das neuronale Netz optimale Parameter.

Bei dem gemeinsamen Training für mehrere Fahrzeugkameras 2-i werden in einer ersten Anwendung bevorzugt Groundtruth-Daten verwendet, welche eine für alle Zielkameras 2-1, 2-2, 2-3, 2-4 angewandte Helligkeit und Balance aufweisen. Mit anderen Worten sind die Groundtruth-Daten für alle Zielkameras 2-1, 2-2, 2-3, 2-4 derart ausbalanciert, dass beispielsweise bei einer Surroundview-Anwendung keine Helligkeitsunterschiede in den Groundtruth-Daten erkennbar sind. Mit diesen Groundtruth-Daten als Referenz und den Eingangsdaten der Zielkameras 2-1, 2-2, 2-3, 2-4, die unterschiedliche Helligkeiten haben können, wird ein neuronales Netz CNN1, CNN10, CNN11, CNN12, hinsichtlich eines optimalen Parametersets für das Netz trainiert. Dieser Datensatz kann beispielsweise aus Bildern mit weißem und rotem Scheinwerferlicht für die Frontkameras 2-1 und Rückkameras 2-2, und dunklen Bildern für die Seitenkameras 2-3, 2-4 bestehen. Denkbar sind ebenfalls Daten mit unterschiedlich ausgeleuchteten Seitenbereichen L, R, beispielsweise wenn sich das Fahrzeug 10 neben einer Straßenlaterne befindet, oder das Fahrzeug 10 auf einer Seite eine zusätzliche Lichtquelle aufweist.

In einer weiteren Anwendung kann das neuronale Netz für die gemeinsamen Kameras 2-i dahingehend trainiert werden, dass auch im Falle von fehlenden Trainingsdaten und Groundtruth-Daten für eine Kamera, beispielsweise einer Seitenkamera 2-3 oder 2-4, das Netz die Parameter für diese Kamera 2-3 oder 2-4 mit den fehlenden Daten basierend auf den Trainingsdaten der anderen Kameras 2-1, 2-2 und 2-4 oder 2-3 trainiert und optimiert. Dies kann beispielsweise als Einschränkung (bzw. Constraint) im Training des Netzes erreicht werden, beispielsweise als Annahme, dass die Korrektur und das Training aufgrund ähnlicher Lichtverhältnisse der Seitenkameras 2-3 und 2-4 immer gleich sein müssen.

In einem letzten Beispiel nutzt das neuronale Netz zeitlich unterschiedliche und mit den Kameras 2-i korrelierte Trainings- und Groundtruth-Daten, welche durch die verschiedenen Kameras 2-i zu unterschiedlichen Zeitpunkten aufgenommen wurde. Dazu können Informationen von Features oder Objekten und deren Groundtruth-Daten verwendet werden, welche beispielsweise zu einem Zeitpunkt t von der Frontkamera 2-1 und zu einem Zeitpunkt t+n von den Seitenkameras 2-3, 2-4 aufgenommen wurden. Diese Feature oder Objekte und deren Groundtruth-Daten können fehlende Informationen in den Training- und Grorundtruth-Daten der jeweils anderen Kameras ersetzen, wenn sie in den Bildern der anderen Kameras 2-i und dann vom Netz als Trainingsdaten verwendet werden. Auf diese Weise kann das Netz die Parameter für alle Seitenkameras 2-3, 2-4 optimieren, und gegebenenfalls fehlende Informationen in den Trainingsdaten kompensieren.

Dies führt bei der Verwendung von mehreren Fahrzeugkameras 2-i zu einer angepassten Helligkeit und Balance für alle Fahrzeugkameras 2-i, da die individuellen Beleuchtungsprofile im Außenraum im Gesamtverbund explizit erfasst und trainiert werden.

Auch im Falle eines Rundumsichtkamerasystems kann eine maschinelle Wildtierdetektion auf den Bilddaten des Kamerasystems K erfolgen. Dazu können je nach Ausgestaltung des Detektionsverfahrens die Eingangsbilddaten oder die umgewandelten optimierten Ausgabebilddaten verwendet werden.

Fig. 2 zeigt schematisch eine allgemeine Übersicht eines Systems zur Bildumwandlung 4 bzw. zur Sichtverbesserung von Kamerabildern. Wesentlicher Bestandteil ist ein künstliches neuronales Netzwerk CNN1, welches in einer Trainingsphase lernt, einem Satz von Trainingsbildern In (In1, In2, In3, ...) einen Satz von korrespondieren sichtverbesserten Bildern Out (Out1, Out2, Out3, ...) zuzuordnen. Zuordnen heißt hierbei, dass das neuronale Netz CNN1 lernt, ein sichtverbessertes Bild zu generieren. Ein Trainingsbild (In1, In2, In3, ...) kann z.B. eine Straßenszene bei Dämmerung enthalten, auf dem mit dem menschlichen Auge nur ein unmittelbar vor dem Fahrzeug befindliches weiteres Fahrzeug und der Himmel erkennbar sind. Auf dem korrespondierenden sichtverbesserten Bild (Out1, Out2, Out3, ...) sind zusätzlich die Konturen des weiteren Fahrzeugs, ein Bürgersteig als Fahrbahnbegrenzung und angrenzende Gebäude erkennbar.

Vorzugsweise dient ein Faktor d als zusätzliche Eingangsgröße für das neuronale Netz CNN1. Der Faktor d ist ein Maß für den Grad der Sichtverbesserung. Beim Training kann der Faktor d für ein Bildpaar aus Trainingsbild und sichtverbessertem Bild (In1, Out1; In2, Out2; In3, Out3; ...) vorab ermittelt und dem neuronalen Netz CNN1 bereitgestellt werden. Beim Einsatz des trainierten neuronalen Netzes CNN1 kann über die Vorgabe eines Faktors d gesteuert werden, wie stark das neuronale Netz CNN1 ein Bild "erhellt" bzw. "abdunkelt" - man kann sich den Faktor d auch als einen externen Regressionsparameter vorstellen (nicht nur hell - dunkel, sondern mit einer beliebigen Abstufung). Da der Faktor d möglichen Schwankungen im Bereich von +/- 10% unterliegen kann, wird dies während des Trainings berücksichtigt. Der Faktor d kann während des Trainings um circa +/- 10% verrauscht werden (z.B., während der verschiedenen Epochen des Trainings des neuronalen Netzwerkes), um während der Inferenz im Fahrzeug robust gegenüber Fehlschätzungen des Faktors d im Bereich von ca. +/- 10% zu sein. Mit anderen Worten liegt die nötige Genauigkeit von Faktor d im Bereich von +/- 10% - somit ist das neuronale Netz CNN1 robust gegenüber Abweichungen bei Schätzungen von diesem Parameter.

Eine Möglichkeit zur Erzeugung der Trainingsdaten (Trainingsbilder (In1, In2, In3, ...) und zugeordnete sichtverbesserte Bilder (Out1, Out2, Out3, ...)) besteht in der Aufnahme von Bilddaten einer Szene mit jeweils einer kurzen und zeitgleich bzw. unmittelbar aufeinander folgend mit einer langen Belichtungszeit. Darüberhinausgehend können für eine Szene Bildpaare (In1, Out1; In2, Out2; In3, Out3; ...) mit verschiedenen Faktoren d aufgenommen werden, um so ein kontinuierliches Spektrum für die Sichtverbesserung abhängig von dem Parameter bzw. Faktor d zu lernen. Vorzugsweise ist das Kamerasystem K während der Erzeugung der Trainingsdaten stationär (unbewegt) gegenüber der zu erfassenden Umgebung. Beispielsweise können die Trainingsdaten mittels eines Kamerasystems K eines stehenden Fahrzeugs F erfasst werden. Die vom Kamerasystem K erfasste Szene kann insbesondere eine statische Umgebung beinhalten, also ohne bewegte Objekte.

Wenn das neuronale Netz CNN1 trainiert ist, erfolgt eine Sichtverbesserung nach folgendem Schema:

Eingangsbild → CNN1

Faktor d →CNN1

CNN1 → sichtverbessertes Ausgangs-/Ausgabebild.

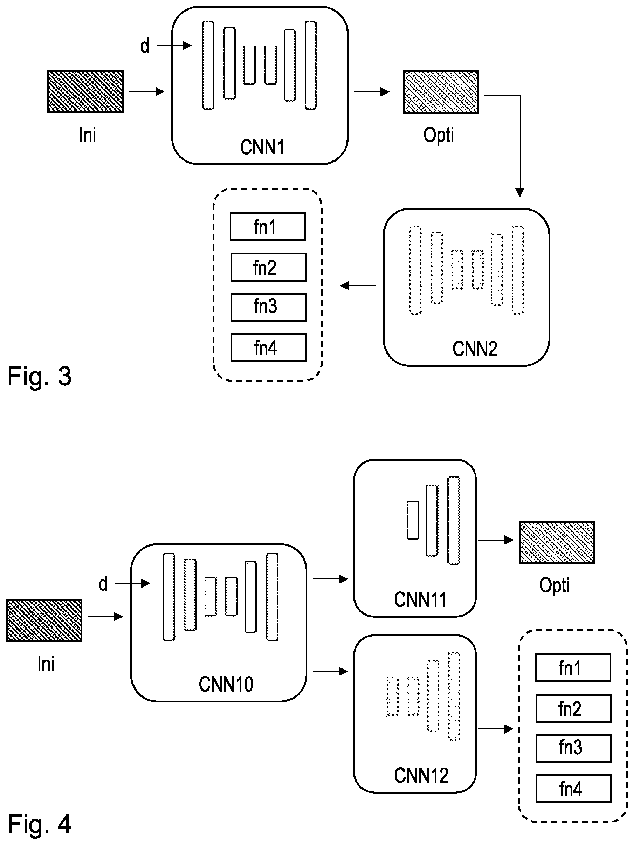

Die Fig. 3 bis 5 zeigen Ausführungsbeispiele für mögliche Kombinationen eines ersten Netzwerks für die Sichtverbesserung mit einem oder mehreren Netzwerken der Funktionen für Fahrerassistenzfunktionen und Automatisiertes Fahren geordnet nach dem Verbrauch an Rechenressourcen.

Fig. 3 zeigt ein System mit einem ersten neuronalen Netz CNN1 zur Sichtverbesserung mit einem nachgelagerten zweiten neuronalen Netz CNN2 für Detektionsfunktionen (fn1, fn2, fn3, fn4). Die Detektionsfunktionen (fn1, fn2, fn3, fn4) sind hierbei Bildverarbeitungsfunktionen, die für ADAS oder AD-Funktionen relevante Objekte, Strukturen, Eigenschaften (allgemein: Merkmale) in den Bilddaten detektieren. Viele solcher Detektionsfunktionen (fn1, fn2, fn3, fn4), die auf maschinellem Lernen beruhen, sind bereits entwickelt oder Gegenstand aktueller Entwicklung (z.B: Objektklassifikation, Verkehrszeichenklassifikation, semantische Segmentierung, Tiefenschätzung, Fahrspurmarkierungserkennung und -lokalisierung). Auf sichtverbesserten Bildern (Opti) liefern Detektionsfunktionen (fn1, fn2, fn3, fn4) des zweiten neuronalen Netzes CNN2 bessere Ergebnisse als auf den ursprünglichen Eingangsbilddaten (Ini) bei schlechten Sichtverhältnissen. Dadurch gelingen Detektion und Klassifikation von Wildtieren in einem bei Dämmerung oder Nacht schlecht ausgeleuchteten Bereich neben der Fahrbahn dennoch zuverlässig und frühzeitig. Im Fall einer erkannten drohenden Kollision des Fahrzeugs mit einem sich in den Fahrkorridor bewegenden Rehs kann der Fahrer akkustisch und optisch gewarnt werden. Falls der Fahrer nicht reagiert, kann eine automatisierte Notbremsung erfolgen.

Wenn die beiden neuronalen Netze CNN1 und CNN2 trainiert sind, kann ein Verfahren nach folgendem Schema ablaufen:
Eingangsbild (Ini), Faktor d → CNN1 → sichtverbessertes Ausgangs-/Ausgabebild (Opti) → CNN2 für Detektionsfunktionen (fn1, fn2, fn3, fn4) → Ausgabe der Detektionen: Objekte wie z.B. Tiere, Tiefe, Spur, Semantik, ...

Fig. 4 zeigt ein neuronales Netzwerk CNN10 für die Sichtverbesserung eines Eingangsbildes (Ini) ggfs. gesteuert durch einen Faktor d, welches Merkmalsrepräsentationsschichten (als Eingangs- bzw. untere Schichten) mit dem Netzwerk für die Detektionsfunktionen (fn1, fn2, fn3, fn4) teilt. In den Merkmalsrepräsentationsschichten des neuronalen Netzwerks CNN10 werden gemeinsame Merkmale für die Sichtverbesserung und für die Detektionsfunktionen gelernt.

Das neuronale Netz CNN10 mit geteilten Eingangsschichten und zwei separaten Ausgängen weist einen erster Ausgang CNN 11 zur Ausgabe des sichtverbesserten Ausgangs-/Ausgabebildes (Opti) sowie einen zweiten Ausgang CNN 12 zur Ausgabe der Detektionen: Objekte, Tiefe, Spur, Semantik, etc. auf.

Dadurch, dass beim Training die Merkmalsrepräsentationsschichten sowohl hinsichtlich der Sichtverbesserung als auch der Detektionsfunktionen (fn1, fn2, fn3, fn4) optimiert werden, bewirkt eine Optimierung der Sichtverbesserung zugleich eine Verbesserung der Detektionsfunktionen (fn1, fn2, fn3, fn4).

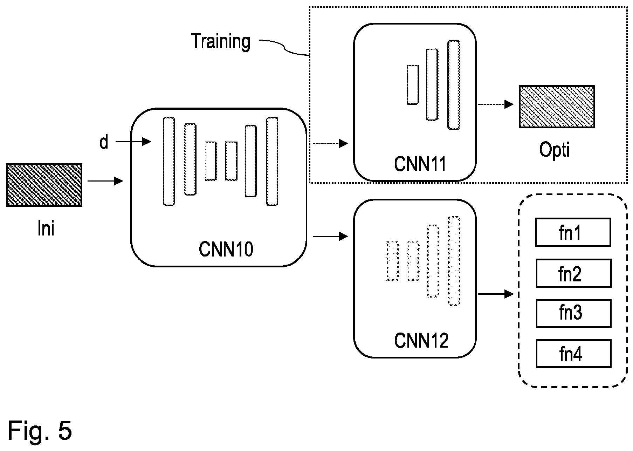

Falls nun eine Ausgabe des sichtverbesserten Bildes (Opti) nicht gewünscht bzw. nicht erforderlich ist, kann der Ansatz weiter variiert werden, wie anhand von Fig. 5 erläutert wird.

Fig. 5 zeigt einen auf dem System der Fig. 4 basierenden Ansatz zur neuronalen-Netz-basierten Sichtverbesserung durch Optimierung der Merkmale. Um Rechenzeit zu sparen, werden die Merkmale für die Detektionsfunktionen (fn1, fn2, fn3, fn4) während des Trainings hinsichtlich Sichtverbesserung und hinsichtlich der Detektionsfunktionen (fn1, fn2, fn3, fn4) optimiert.

Zur Laufzeit, d.h. beim Einsatz des trainierten neuronalen Netzes (CNN10, CNN11, CNN12), werden keine sichtverbesserten Bilder (Opti) berechnet.

Dennoch sind die Detektionsfunktionen (fn1, fn2, fn3, fn4) - wie bereits erläutert - durch das gemeinsame Training von Sichtverbesserung und Detektionsfunktionen verbessert verglichen mit einem System mit nur einem neuronalen Netz (CNN2) für Detektionsfunktionen (fn1, fn2, fn3, fn4), bei dem im Training auch nur die Detektionsfunktionen (fn1, fn2, fn3, fn4) optimiert worden sind.

In der Trainingsphase wird durch eine zusätzliche Ausgangsschnittstelle (CNN11) das helligkeitsverbesserte Bild (Opti) ausgegeben und mit der Ground Truth (dem korrespondierenden sichtverbesserten Trainingsbild) verglichen. In der Testphase bzw. zur Laufzeit kann dieser Ausgang (CNN11) weiterverwendet werden oder, um Rechenzeit zu sparen, abgeschnitten werden. Die Gewichte für die Detektionsfunktionen (fn1, fn2, fn3, fn4) werden bei diesem Training mit dem zusätzlichen Ausgang (CNN11) dahingehend modifiziert, dass sie die Helligkeitsverbesserungen für die Detektionsfunktionen (fn1, fn2, fn3, fn4) berücksichtigen. Die Gewichte der Detektionsfunktionen (fn1, fn2, fn3, fn4) lernen somit implizit die Information über die Helligkeitsverbesserung.

Neben Kraftfahrzeugen sind alternative Anwendungsgebiete: Flugzeuge, Busse und Bahnen.

## Patentansprüche

1. Computer-implementiertes Verfahren zur Vermeidung von Unfällen durch Wildwechsel bei Dämmerung und bei Nacht mit den Schritten:
a) Erfassen von Eingangs-Bilddaten (Ini) einer aktuellen Helligkeit einer Fahrbahn und eines angrenzenden Bereichs seitlich der Fahrbahn mittels eines fahrzeuggebundenen Kamerasystems (K) bei Dämmerung oder bei Nacht, und Schätzen oder Bestimmen eines Faktors d als Maß für eine aktuelle Helligkeit in den Eingangs-Bilddaten (Ini),
b) Umwandeln der Eingangs-Bilddaten (Ini) in Ausgabe-Bilddaten (Opti) mit abweichender Helligkeit mittels eines trainierten künstlichen neuronalen Netzwerks (CNN1, CNN10, CNN11, CNN12) in Abhängigkeit von dem Faktor d, wobei das neuronale Netzwerk (CNN1, CNN10, CNN11, CNN12) dazu konfiguriert ist, die Eingangs-Bilddaten (Ini) mit der aktuellen Helligkeit in Abhängigkeit von dem Faktor d in sichtverbesserte Ausgabe-Bilddaten (Opti) mit abweichender Ausgabehelligkeit umzuwandeln, und wobei die Umwandlung einen Ausgleich der Ausleuchtung des Bereichs seitlich der Fahrbahn und des Fahrbahnbereichs bewirkt, und
c) Ausgeben der sichtverbesserten Ausgabe-Bilddaten (Opti) an mindestens eine Wildtier-Detektionsfunktion, welche auf der Grundlage der Ausgabe-Bilddaten (Opti) detektierte Wildtier-Objektinformationen ermittelt und ausgibt.

2. Verfahren nach einem der vorhergehenden Ansprüche, wobei das künstliche neuronale Netz (CNN1, CNN10, CNN11, CNN12) eine gemeinsame Eingangsschnittstelle für zwei separate Ausgangsschnittstellen (CNN11, CNN12) aufweist, wobei die gemeinsame Eingangsschnittstelle geteilte Merkmalsrepräsentationsschichten aufweist, wobei an der ersten Ausgangsschnittstelle (CNN11) helligkeitsumgewandelte Bilddaten (Opti) ausgegeben werden, wobei an der zweiten Ausgangsschnittstelle (CNN12) ADAS-relevante Detektionen mindestens einer ADAS-Detektionsfunktion (fn1, fn2, fn3, fn4) ausgegeben werden und wobei im Rahmen des Trainings die Ausgaben beider Ausgangsschnittstellen (CNN11, CNN12) optimiert werden.

3. Verfahren nach einem der vorhergehenden Ansprüche, wobei das Erfassen der Eingangsbilddaten mittels eines Kamerasystems (K), das eine parallel zur Fahrtrichtung blickende Weitwinkelkamera umfasst, erfolgt.

4. Verfahren nach einem der vorhergehenden Ansprüche, wobei das Erfassen der Eingangsbilddaten mittels eines Kamerasystems (K), das ein Rundumsichtkamerasystem mit einer Mehrzahl von Fahrzeugkameras (2-i) umfasst, erfolgt.

5. Verfahren nach Anspruch 4, wobei für jede der Fahrzeugkameras (2-i) ein eigener Faktor d geschätzt oder bestimmt wird.

6. Vorrichtung (1) zur Vermeidung von Unfällen durch Wildwechsel bei Dämmerung und Nacht umfassend ein fahrzeuggebundenes Kamerasystem (K) zur Erfassung einer Umgebung des Fahrzeugs (10), eine Datenverarbeitungseinheit (3) und eine Ausgabeeinheit, wobei
- das Kamerasystem (K) eingerichtet ist, eine Fahrbahn und einen angrenzenden Bereich seitlich der Fahrbahn in Form von Eingangs-Bilddaten (Ini) zu erfassen und einen Faktor d als Maß für eine aktuelle Helligkeit in den Eingangs-Bilddaten (Ini) zu schätzen oder zu bestimmen,
- die Datenverarbeitungseinheit 3 konfiguriert ist zur Helligkeits-Umwandlung der bei Dämmerung oder Nacht erfassten Eingangs-Bilddaten (Ini) des Kamerasystems (K) in Ausgabe-Bilddaten (Opti) mittels eines trainierten künstlichen neuronalen Netzwerks (CNN1, CNN10, CNN11, CNN12) in Abhängigkeit von dem Faktor d, das dazu konfiguriert ist, die Eingangs-Bilddaten (Ini) mit der aktuellen Helligkeit in Abhängigkeit von dem Faktor d in sichtverbesserte Ausgabe-Bilddaten (Opti) mit abweichender Ausgabehelligkeit umzuwandeln und
- die Ausgabeeinheit dazu konfiguriert ist, die umgewandelten, sichtverbesserten Ausgabe-Bilddaten (Opti) an mindestens eine Wildtier-Detektionsfunktion auszugeben, welche auf der Grundlage der Ausgabe-Bilddaten (Opti) detektierte Wildtier-Objektinformationen ermittelt und ausgibt.

7. Vorrichtung (1) nach Anspruch 6, wobei das Kamerasystem (K) eine fahrzeuggebundene parallel zur Fahrtrichtung blickende Weitwinkelkamera umfasst.

8. Vorrichtung (1) nach Anspruch 6 oder 7, wobei das Kamerasystem (K) ein Rundumsichtkamerasystem mit einer Mehrzahl von Fahrzeugkameras (2-i) umfasst.

9. Vorrichtung (1) nach einem der Ansprüche 6 bis 8, wobei die Datenverarbeitungseinheit (3) in eine hardwarebasierter Bildvorverarbeitungsstufe implementiert ist.

10. Vorrichtung (1) nach einem der Ansprüche 6 bis 9, wobei das trainierte künstliche neuronale Netzwerk (CNN1, CNN10, CNN11) zur Helligkeitsumwandlung Bestandteil eines fahrzeugseitigen ADAS-Detektions-Neuronalen-Netzwerks (CNN2, CNN12) mit einer geteilten Eingangsschnittstelle, und zwei separaten Ausgangsschnittstellen ist, wobei die erste Ausgangsschnittstelle (CNN11) zur Ausgabe der umgewandelten Ausgabebilddaten (Opti) und die zweite Ausgangsschnittstelle (CNN12) zur Ausgabe der ADAS-relevanten Detektionen konfiguriert sind.

11. Computer Programmelement, welches, wenn damit eine Datenverarbeitungseinheit (3) programmiert wird, die Datenverarbeitungseinheit (3) dazu anweist, ein Verfahren nach einem der Ansprüche 1 bis 5 durchzuführen.

12. Computerlesbares Speichermedium, auf dem ein Programmelement nach Anspruch 11 gespeichert ist.

## Claims

1. A computer-implemented method for avoiding accidents caused by wild animals crossing at dusk and at night, comprising the steps:
a) capturing input image data (Ini) of a current brightness of a roadway and of an adjacent region at the side of the roadway by means of a vehicle-based camera system (K) at dusk or at night, and estimating or determining a factor d as a measure of a current brightness in the input image data (Ini),
b) converting the input image data (Ini) into output image data (Opti) having a deviating brightness by means of a trained artificial neural network (CNN1, CNN10, CNN11, CNN12) depending on the factor d, wherein the neural network (CNN1, CNN10, CNN11, CNN12) is configured to convert the input image data (Ini) with the current brightness depending on the factor d into visually enhanced output image data (Opti) with a deviating output brightness, and wherein the conversion causes a balance between the illumination of the region at the side of the roadway and the roadway region, and
c) outputting the visually enhanced output image data (Opti) to at least one wildlife detection function that determines and outputs detected wildlife object information on the basis of the output image data (Opti).

2. The method according to any one of the preceding claims, wherein the artificial neural network (CNN1, CNN10, CNN11, CNN12) has a common input interface for two separate output interfaces (CNN11, CNN12), wherein the common input interface has shared feature representation layers, wherein brightness-converted image data (Opti) are output at the first output interface (CNN11), wherein ADAS-relevant detections of at least one ADAS detection function (fn1, fn2, fn3, fn4) are output at the second output interface (CNN12) and wherein the outputs of both output interfaces (CNN11, CNN12) are optimised in the context of the training.

3. The method according to any one of the preceding claims, wherein the capture of the input image data is performed by means of a camera system (K) that comprises a wide-angle camera looking parallel to the direction of travel.

4. The method according to any one of the preceding claims, wherein the capture of the input image data is performed by means of a camera system (K) that comprises a surround-view camera system having a plurality of vehicle cameras (2-i).

5. The method according to claim 4, wherein a separate factor d is estimated or determined for each of the vehicle cameras (2-i).

6. A device (1) for avoiding accidents caused by wild animals crossing at dusk and at night, comprising a vehicle-based camera system (K) for capturing an environment of the vehicle (10), a data processing unit (3) and an output unit, wherein
- the camera system (K) is adapted to capture a roadway and an adjacent region at the side of the roadway in the form of input image data (Ini) and to estimate or determine a factor d as a measure of a current brightness in the input image data (Ini),
- the data processing unit 3 is configured to convert the brightness of the input image data (Ini) of the camera system (K), captured at dusk or at night, into output image data (Opti) by means of a trained artificial neural network (CNN1, CNN10, CNN11, CNN12) depending on the factor d, which neural network is configured to convert the input image data (Ini) with the current brightness depending on the factor d into visually enhanced output image data (Opti) with a deviating output brightness, and
- the output unit is configured to output the converted, visually enhanced output image data (Opti) to at least one wildlife detection function that determines and outputs detected wildlife object information on the basis of the output image data (Opti).

7. The device (1) according to claim 6, wherein the camera system (K) comprises a vehicle-based wide-angle camera that looks parallel to the direction of travel.

8. The device (1) according to claim 6 or 7, wherein the camera system (K) comprises a surround-view camera system with a plurality of vehicle cameras (2-i).

9. The device (1) according to any one of claims 6 to 8, wherein the data processing unit (3) is implemented in a hardware-based image pre-processing stage.

10. The device (1) according to any one of claims 6 to 9, wherein the trained artificial neural network (CNN1, CNN10, CNN11) for brightness conversion is part of a vehicle-side ADAS detection neural network (CNN2, CNN12) having a shared input interface and two separate output interfaces, wherein the first output interface (CNN11) is configured to output the converted output image data (Opti) and the second output interface (CNN12) is configured to output the ADAS-relevant detections.

11. A computer program element which, when it is used to program a data processing unit (3), instructs the data processing unit (3) to perform a method according to any one of claims 1 to 5.

12. A computer-readable medium on which a program element according to claim 11 is stored.

## Revendications

1. Procédé mis en œuvre par ordinateur pour éviter les accidents provoqués par la traversée d'animaux sauvages au crépuscule et la nuit, comprenant les étapes suivantes :
a) l'acquisition de données d'image d'entrée (Ini) d'une luminosité actuelle d'une chaussée et d'une zone adjacente latérale à la chaussée au moyen d'un système de caméra embarqué sur véhicule (K) au crépuscule ou la nuit, et l'estimation ou la détermination d'un facteur d comme mesure d'une luminosité actuelle dans les données d'image d'entrée (Ini),
b) la conversion des données d'image d'entrée (Ini) en données d'image de sortie (Opti) présentant une luminosité différente au moyen d'un réseau neuronal artificiel entraîné (CNN1, CNN10, CNN11, CNN12) en fonction du facteur d, dans lequel le réseau neuronal (CNN1, CNN10, CNN11, CNN12) est configuré pour convertir les données d'image d'entrée (Ini) présentant la luminosité actuelle, en fonction du facteur d, en données d'image de sortie (Opti) à visibilité améliorée présentant une luminosité différente, et dans lequel la conversion entraîne un équilibrage de l'éclairement de la zone latérale à la chaussée et de la zone de chaussée, et
c) la fourniture des données d'image de sortie à visibilité améliorée (Opti) à au moins une fonction de détection d'animaux sauvages, qui détermine et fournit des informations d'objet relatives aux animaux sauvages détectées sur la base des données d'image de sortie (Opti).

2. Procédé selon l'une quelconque des revendications précédentes, dans lequel le réseau neuronal artificiel (CNN1, CNN10, CNN11, CNN12) présente une interface d'entrée partagée pour deux interfaces de sortie séparées (CNN11, CNN12), dans lequel l'interface d'entrée partagée présente des couches de représentation de caractéristiques partagées, dans lequel des données d'image à luminosité convertie (Opti) sont fournies à la première interface de sortie (CNN11), dans lequel des détections pertinentes pour l'ADAS d'au moins une fonction de détection ADAS (fn1, fn2, fn3, fn4) sont fournies à la seconde interface de sortie (CNN12) et dans lequel, dans le cadre de l'apprentissage, les sorties des deux interfaces de sortie (CNN11, CNN12) sont optimisées.

3. Procédé selon l'une quelconque des revendications précédentes, dans lequel l'acquisition des données d'image d'entrée est réalisée au moyen d'un système de caméra (K) comprenant une caméra grand angle orientée parallèlement à la direction de déplacement.

4. Procédé selon l'une quelconque des revendications précédentes, dans lequel l'acquisition des données d'image d'entrée est réalisée au moyen d'un système de caméra (K) comprenant un système de caméra à vision panoramique avec une pluralité de caméras de véhicule (2-i).

5. Procédé selon la revendication 4, dans lequel un facteur distinct d est estimé ou déterminé pour chacune des caméras de véhicule (2-i).

6. Dispositif (1) pour éviter les accidents provoqués par la traversée d'animaux sauvages au crépuscule et la nuit, comprenant un système de caméra embarqué sur véhicule (K) pour détecter un environnement du véhicule (10), une unité de traitement de données (3) et une unité de sortie, dans lequel
- le système de caméra (K) est conçu pour détecter une chaussée et une zone adjacente latérale à la chaussée sous la forme de données d'image d'entrée (Ini) et pour estimer ou déterminer un facteur d comme mesure d'une luminosité actuelle dans les données d'image d'entrée (Ini),
- l'unité de traitement de données (3) est configurée pour convertir la luminosité des données d'image d'entrée (Ini) du système de caméra (K), acquises au crépuscule ou la nuit en données d'image de sortie (Opti), au moyen d'un réseau neuronal artificiel entraîné (CNN1, CNN10, CNN11, CNN12) en fonction du facteur d, qui est configuré pour convertir les données d'image d'entrée (Ini) présentant la luminosité actuelle en fonction du facteur d en données d'image de sortie (Opti) à visibilité améliorée présentant une luminosité de sortie différente et
- l'unité de sortie est configurée pour fournir les données d'image de sortie (Opti) converties et à visibilité améliorée à au moins une fonction de détection d'animaux sauvages, qui détermine et fournit les informations d'objet relatives aux animaux sauvages détectées sur la base des données d'image de sortie (Opti).

7. Dispositif (1) selon la revendication 6, dans lequel le système de caméra (K) comprend une caméra grand angle embarquée sur véhicule orientée parallèlement à la direction de déplacement.

8. Dispositif (1) selon la revendication 6 ou 7, dans lequel le système de caméra (K) comprend un système de caméra à vision panoramique avec une pluralité de caméras de véhicule (2-i).

9. Dispositif (1) selon l'une quelconque des revendications 6 à 8, dans lequel l'unité de traitement de données (3) est mise en œuvre dans un étage de prétraitement d'image basé sur matériel.

10. Dispositif (1) selon l'une quelconque des revendications 6 à 9, dans lequel le réseau neuronal artificiel entraîné (CNN1, CNN10, CNN11) pour la conversion de luminosité fait partie d'un réseau neuronal de détection ADAS côté véhicule (CNN2, CNN12) doté d'une interface d'entrée partagée et de deux interfaces de sortie séparées, dans lequel la première interface de sortie (CNN11) est configurée pour fournir les données d'image de sortie converties (Opti) et la seconde interface de sortie (CNN12) est configurée pour fournir les détections pertinentes pour l'ADAS.

11. Élément de programme informatique, qui, lorsqu'il est utilisé pour programmer une unité de traitement de données (3), ordonne à l'unité de traitement de données (3) de réaliser un procédé selon l'une quelconque des revendications 1 à 5.

12. Support de stockage lisible par ordinateur sur lequel est stocké un élément de programme selon la revendication 11.
